# FASCICULE DE BREVET EUROPEEN

(11) **EP 3 015 728 B1**
(45) Date de publication et mention de la délivrance du brevet: **20.09.2017**
(21) Numéro de dépôt: 15192038.6
(22) Date de dépôt: 29.10.2015
(51) Int. Cl.: F16C 33/76, F16C 33/72, F16C 33/78, F16C 33/80, F16C 19/18, F16C 43/04, F16J 15/02, F16J 15/32

(54) **PALIER À ROULEMENT ÉQUIPÉ D'UN DISPOSITIF D ÉTANCHÉITÉ COMPRENANT UNE ARMATURE**
WÄLZLAGER, DAS MIT EINER ABDICHTVORRICHTUNG EINSCHLIESSLICH EINER ARMATUR AUSGESTATTET IST
ROLLING BEARING PROVIDED WITH A SEALING DEVICE COMPRISING A FRAME

(30) Priorité: 29.10.2014 FR 1460396
(43) Date de publication de la demande: 04.05.2016
(73) Titulaire: NTN-SNR Roulements, 74010 Annecy (FR)
(72) Inventeur: BURNET, Cédric, 74000 Annecy (FR); GUILLAUME, Sébastien, 74000 Annecy (FR); TEILLOU, Cyprien, 74000 Annecy (FR)
(74) Mandataire: Sayettat, Julien Christian

(56) Documents cités:
- EP-A1- 0 097 545
- EP-A1- 1 538 377
- EP-A2- 0 675 364
- FR-A1- 2 217 586
- FR-A1- 2 479 373
- FR-A1- 2 984 978
- US-A- 3 519 316
- US-A1- 2005 191 002

## Description

L'invention concerne un palier à roulement comprenant un organe intérieur, un organe extérieur et des corps roulants disposés dans un espace de roulement formé entre lesdits organes pour permettre leur rotation relative.

En particulier, l'invention s'applique aux paliers à roulement de véhicule automobile, notamment aux paliers de roue. De façon avantageuse, un palier suivant l'invention permet le montage d'une roue motrice ou non motrice de véhicule automobile, l'organe intérieur étant tournant et comprenant des moyens de fixation de la roue tandis que l'organe extérieur est fixe et comprend des moyens de fixation sur un élément du véhicule.

Pour empêcher d'une part les fuites de lubrifiant présent dans l'espace de roulement et d'autre part la contamination dudit espace avec des polluants extérieurs, au moins un côté de l'espace de roulement peut être équipé d'un dispositif d'étanchéité.

On connaît des dispositifs d'étanchéité comprenant une armature portant un capot de recouvrement et/ou un élément d'étanchéité au niveau d'une ouverture de l'espace de roulement afin de limiter la pénétration des polluants dans ledit espace.

En particulier, il est connu de monter l'armature sur un organe en l'équipant d'une portée d'emmanchement sur une paroi dudit organe. En outre, pour définir une position de montage de l'armature relativement à l'organe, on prévoit de former sur ladite armature une portée d'appui axial sur la paroi dudit organe. Un tel dispositif est connu par exemple de EP 0 675 364. Cependant, se pose alors le problème de la tenue mécanique d'un tel montage, notamment relativement aux contraintes de déplacements lors de la rotation de l'organe, ainsi que de la fiabilité de l'étanchéité entre l'armature et ledit organe. En particulier, en fonctionnement, notamment sous forte charge, l'armature peut être soumise à des déplacements axiaux relativement à l'organe au niveau de son emmanchement, ce qui peut induire une perte d'étanchéité.

Or, les paliers doivent satisfaire à des cahiers des charges de plus en plus sévères en termes d'étanchéité, notamment pour la validation des paliers de roue par les constructeurs automobiles, au regard des tests de brouillard salin avec cyclage thermique (tests d'étanchéité statique et dynamique) auxquels doivent satisfaire lesdits paliers.

Pour améliorer la tenue mécanique du montage de l'armature, on peut équiper sa portée d'emmanchement de pattes d'encliquetage en prévoyant un seuil radial sur la paroi, lesdites pattes étant destinées à venir en appui axial arrière sur ledit seuil afin d'immobiliser axialement ladite armature.

Toutefois, cette solution ne donne pas entière satisfaction notamment relativement aux dispersions dimensionnelles pouvant exister entre l'armature et l'organe. En effet, de telles dispersions ne permettent pas, en position de montage, de garantir une disposition des pattes permettant leur encliquetage sur le seuil, pouvant ainsi conduire à une perte de fiabilité de la retenue axiale.

L'invention a pour but de perfectionner l'art antérieur en proposant notamment un palier à roulement équipé d'un dispositif d'étanchéité comprenant une armature dont la tenue mécanique de son montage sur un organe dudit palier est fiabilisé, en particulier relativement aux contraintes de dispersions dimensionnelles et de déformation de ladite armature.

A cet effet, l'invention propose un palier à roulement comprenant un organe extérieur, un organe intérieur et des corps roulants disposés dans un espace de roulement formé entre lesdits organes pour permettre leur rotation relative, ledit palier étant équipé d'un dispositif d'étanchéité comprenant une armature présentant une portée d'emmanchement sur une paroi d'un desdits organes, ladite armature présentant en outre une portée d'appui axial sur ladite paroi en définissant une position de montage de l'armature relativement à l'organe, ladite portée d'emmanchement étant équipée de pattes d'encliquetage et ladite paroi présentant un seuil radial sur lequel lesdites pattes sont destinées à venir en appui axial arrière, lesdites portées d'appui et d'emmanchement étant reliées par un congé de raccordement qui est agencé pour former un jeu avec ladite paroi, ledit jeu étant adapté pour qu'un appui sur ledit congé en position de montage induise un déplacement réversible de la portée d'emmanchement relativement à la paroi, ledit déplacement réversible étant agencé pour fiabiliser la disposition des pattes d'encliquetage en appui axial arrière contre le seuil.

D'autres objets et avantages de l'invention apparaîtront dans la description qui suit, faite en référence aux figures annexées, dans lesquelles :
- la figure 1 représente en coupe longitudinale un palier à roulement selon un mode de réalisation de l'invention, les figures 1a et 1b étant des vues agrandies de la figure 1, montrant plus particulièrement le montage de l'armature d'un dispositif d'étanchéité au niveau respectivement d'un côté de l'espace de roulement dudit palier ;
- la figure 2 est une vue en perspective de l'armature représentée sur la figure 1a ;
- la figure 3 est une vue en perspective de l'armature représentée sur la figure 1 b.

En relation avec ces figures, on décrit ci-dessous un palier à roulement, en particulier pour le montage d'une roue motrice ou non motrice d'un véhicule automobile.

Le palier comprend un organe extérieur 1 et un organe intérieur 2, au moins un desdits organes pouvant comprendre des moyens de fixation à respectivement une structure fixe ou un ensemble tournant. Dans le mode de réalisation représenté, l'organe extérieur 1 est fixe, comprenant une bride 3 pourvue de trous de fixation (non représentés) agencés pour permettre la fixation du palier par vissage ou boulonnage, par exemple sur un élément de suspension du véhicule automobile. L'organe intérieur 2 qui est alors tournant comprend une bride 4 pourvue de trous de fixation 4a par vissage de la roue.

Entre ces organes 1, 2, un espace de roulement est formé pour permettre la rotation relative desdits organes autour d'un axe A. A cet effet, chaque organe 1, 2 présente deux pistes de roulement espacées axialement de sorte à former entre lesdits organes deux chemins de roulement dans lesquels sont disposées respectivement une rangée de corps roulants 5 sous la forme de billes, lesdites billes étant maintenues dans une rangée par l'intermédiaire d'une cage de rétention 6.

Sur les figures, l'organe intérieur 2 comprend un corps et une bague rapportée 7 qui est emmanchée sur la surface extérieure dudit corps, l'extrémité interne de ladite surface présentant un repli extérieur 8 pour assurer le maintien axial de ladite bague sur ladite surface. Par ailleurs, une piste de roulement est réalisée sur la bague 7 et l'autre piste de roulement étant réalisée sur le corps. Toutefois, l'invention n'est pas limitée à ce mode de réalisation du palier, en particulier relativement à la présence des brides 3, 4, à la réalisation des pistes de roulement, à la géométrie des corps roulants 5, à la géométrie et/ou à la disposition relative des organes fixe 1 et tournant 2.

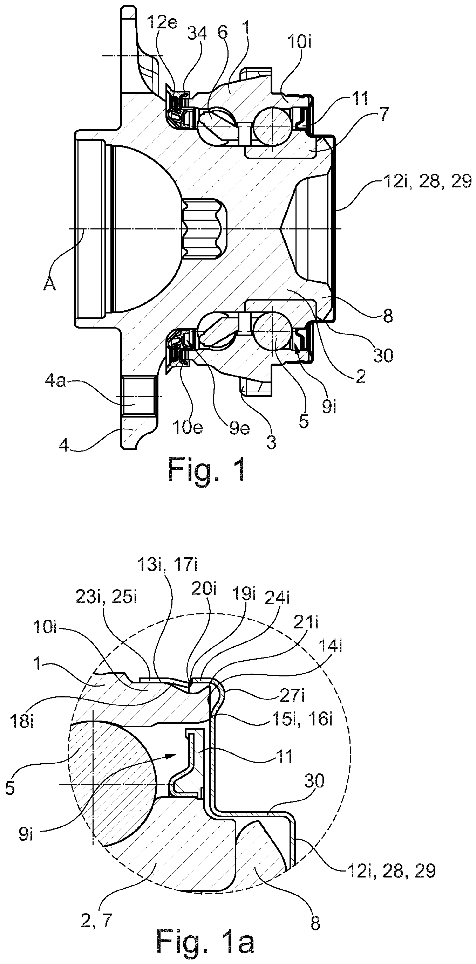

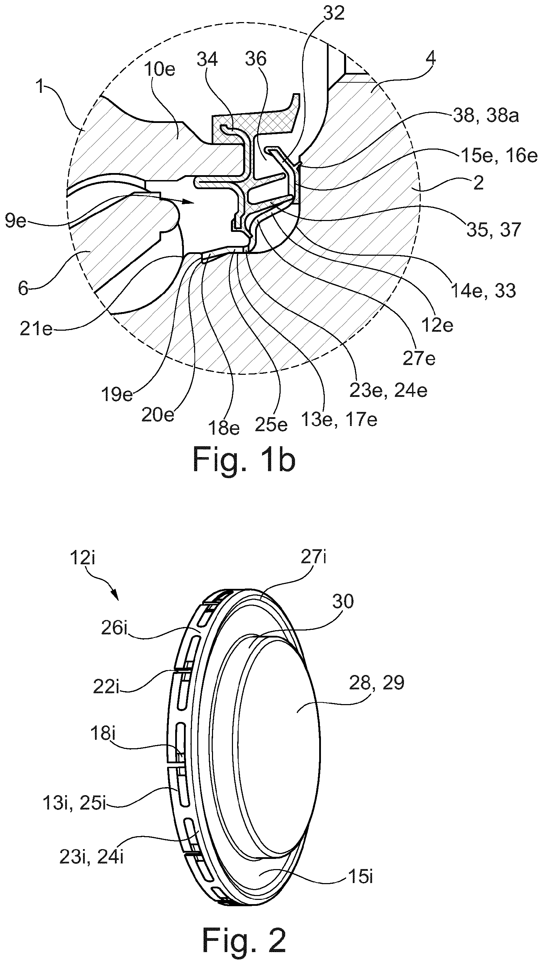

L'espace de roulement débouche à l'extérieur par l'intermédiaire de deux ouvertures annulaires 9e, 9i qui sont formées entre les organes 1, 2 de part et d'autre des pistes de roulement, respectivement du côté externe (à gauche sur la figure 1) et du côté interne (à droite sur la figure 1).

L'ouverture interne 9i est formée entre un bord intérieur d'une extension axiale interne 10i de l'organe extérieur 1 et un bord extérieur s'étendant axialement sur la bague rapportée 7. L'ouverture externe 9e est formée entre une extension axiale externe 10e de l'organe extérieur 1 et l'organe intérieur 2.

En outre, le palier comprend un codeur 11 qui est disposé sur le côté interne de l'espace de roulement en étant solidarisé sur le diamètre extérieur d'une portée axiale de la bague 7. En effet, lorsque l'on veut connaître la vitesse de rotation, le sens de déplacement et/ou la position angulaire de l'organe tournant 2 par rapport à l'organe fixe 1, il est connu d'utiliser un système capteur d'informations comprenant un codeur générateur d'impulsions magnétiques et un capteur fixe muni d'au moins un élément sensible apte à détecter ces impulsions.

Pour protéger l'espace de roulement de la pollution du milieu environnant, le palier comprend au moins un dispositif d'étanchéité agencé pour empêcher, ou au moins limiter, la pénétration de polluants dans l'espace de roulement au travers d'au moins une ouverture 9e, 9i dudit espace. Dans le mode de réalisation représenté, les ouvertures 9e, 9i sont chacune équipées d'un dispositif d'étanchéité.

Chaque dispositif d'étanchéité présente au moins une armature annulaire 12e, 12i qui est solidarisée par emmanchement à un organe 1, 2. Dans cette description, les termes de positionnement dans l'espace sont pris en référence à l'axe de rotation A du palier ou à la course d'emmanchement de l'armature 12e, 12i. En particulier, les termes « intérieur » et « extérieur » sont relatifs à une disposition respectivement proche et à distance de cet axe A, les termes « avant » et « arrière » étant relatifs au sens d'emmanchement de l'armature 12e, 12i sur l'organe 1, 2 correspondant.

L'armature 12e, 12i peut être réalisée en une seule pièce, notamment à base de matériau plastique ou métallique, par exemple en tôle emboutie. En particulier, l'armature 12e, 12i présente une portée 13e, 13i qui est montée par emmanchement axial sur une paroi 14e, 14i d'un organe 1, 2 afin de réaliser la solidarisation de ladite armature sur ledit organe, ladite portée étant en interférence radiale avec ladite paroi pour exercer l'effort d'emmanchement.

L'armature 12e, 12i présente également une portée 15e, 15i qui est en appui axial sur la paroi 14e, 14i en définissant une position de montage de ladite armature relativement à l'organe 1, 2. En particulier, les portées d'appui axial 15e, 15i et d'emmanchement 13e, 13i sont disposées sur des portées complémentaires respectivement radiale 16e, 16i et axiale 17e, 17i de la paroi 14e, 14i.

Pour fiabiliser le montage de l'armature 12e, 12i sur l'organe 1, 2, on prévoit d'équiper la portée d'emmanchement 13e, 13i de pattes d'encliquetage 18e, 18i dans la paroi 14e, 14i afin d'empêcher tout déplacement de ladite armature, par exemple sous forte charge. En outre, la présence de telles pattes 18e, 18i permet d'envisager une réduction de la longueur axiale de la portée d'emmanchement 13e, 13i et donc de l'encombrement axial du palier, sans risque de démontage de l'armature 12e, 12i bien que l'interférence d'emmanchement soit réduite.

Pour permettre l'encliquetage, la paroi 14e, 14i présente un seuil radial 19e, 19i formé dans la portée axiale complémentaire 17e, 17i et sur lequel les pattes 18e, 18i sont destinées à venir en appui axial arrière en fin d'emmanchement. Dans le mode de réalisation représenté, la portée axiale complémentaire 17e, 17i est pourvue d'une gorge annulaire 20e, 20i présentant un bord arrière sur lequel le seuil 19e, 19i est formé, les pattes 18e, 18i étant destinées à être disposées dans ladite gorge en appui sur ledit seuil.

Les pattes 18e, 18i sont déformables élastiquement et sont réparties angulairement à l'intérieur de la portée d'emmanchement 13e, 13i. En particulier, les pattes 18e, 18i sont déformables radialement entre un état contraint inscrit dans la portée d'emmanchement 13e, 13i et un état libre dans lequel le diamètre circonscrit défini entre lesdites pattes correspond à un diamètre d'interférence avec le seuil 19e, 19i.

Les pattes 18e, 18i sont déformées en état contraint autour du seuil 19e, 19i lors de la translation d'emmanchement, lesdites pattes étant destinées à prendre appui sur ledit seuil en fin de translation par retour élastique en état libre. Selon le mode de réalisation représenté, le seuil radial 19e, 19i présente un diamètre extérieur qui est supérieur au diamètre circonscrit des pattes 18e, 18i, ledit diamètre circonscrit étant augmenté par débattement extérieur radial desdites pattes vers leur état contraint et étant nominal lors du retour élastique desdites pattes en état libre.

De façon avantageuse, le seuil 19e, 19i présente un chanfrein arrière 21e, 21i qui est agencé pour faciliter le passage des pattes 18e, 18i autour dudit seuil lors de l'encliquetage, notamment en limitant les risques d'endommagement desdites pattes lors dudit passage.

En outre, la portée d'emmanchement 13e, 13i présente une interférence radiale avec le bord avant de la gorge 20e, 20i, permettant d'optimiser la tenue mécanique de l'emmanchement.

Les pattes 18e, 18i peuvent être séparées circonférentiellement par des encoches 22e, 22i qui présentent chacune une dimension agencée pour favoriser le débattement angulaire élastique radial de chacune desdites pattes lors de l'encliquetage.

En relation avec les figures 2 à 4, chaque armature 12e, 12i comprend une couronne axiale 23e, 23i qui est conformée pour présenter la portée d'emmanchement 13e, 13i et les pattes d'encliquetage 18e, 18i. La couronne axiale 23e, 23i comprend une base annulaire 24e, 24i et des secteurs angulaires 25e, 25i qui sont destinés à être emmanchés sur la portée complémentaire axiale 17e, 17i, lesdits secteurs étant séparés par des encoches 22e, 22i et reliés chacun à ladite base par un pont de liaison 26e, 26i.

Chaque pont de liaison 26e, 26i s'étend depuis une portion centrale d'un secteur 25e, 25i en étant agencé pour permettre un débattement dudit secteur relativement à la base 24e, 24i pour favoriser l'emmanchement. En outre, chaque secteur 25e, 25i est équipé d'une paire de pattes d'encliquetage 18e, 18i s'étendant chacune essentiellement axialement en étant inclinées vers l'intérieur depuis respectivement une extrémité dudit secteur, les pattes 18e, 18i de deux secteurs 25e, 25i adjacents délimitant circonférentiellement une encoche 22e, 22i.

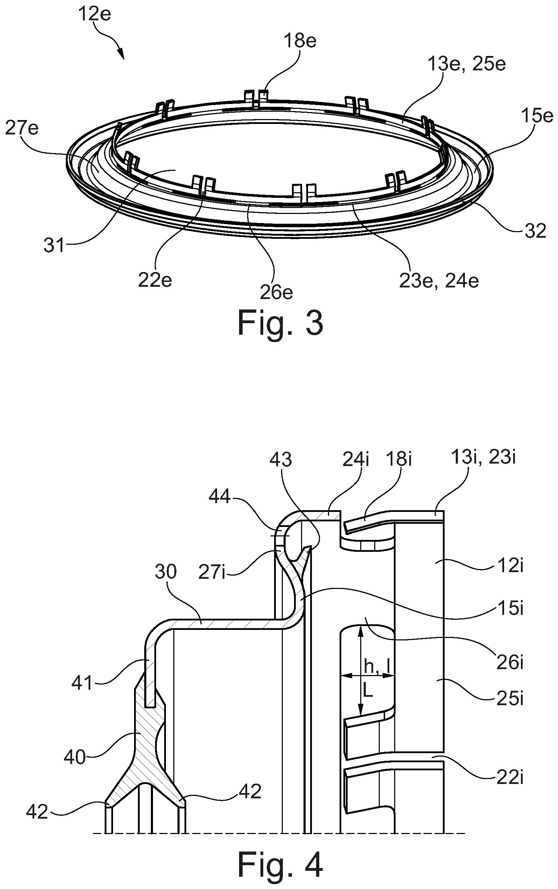

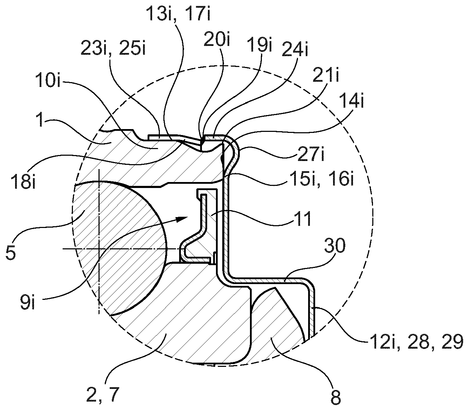

En particulier, les pattes 18e, 18i présentent une même dimension en comprenant une extrémité libre présentant une portée arrière qui est destinée à venir en interférence axiale sur le seuil 19e, 19i ainsi que deux côtés s'étendant de manière parallèle de part et d'autre de ladite extrémité libre. De façon avantageuse, la longueur circonférentielle L entre une patte 18e, 18i et le pont 26e, 26i qui la relie à la base 24e, 24i doit être environ quatre fois plus grand que la hauteur axiale h dudit pont qui doit être sensiblement égale à la largeur l circonférentielle des pattes 18e, 18i pour un angle d'inclinaison desdites pattes de l'ordre de 15° (voir figure 4).

Toutefois, l'invention n'est pas limitée à un mode de réalisation de l'encliquetage, notamment relativement à la géométrie du seuil radial 19e, 19i et/ou des pattes 18e, 18i, ainsi qu'à leur nombre.

Les portées d'emmanchement 13e, 13i et d'appui axial 15e, 15i sont reliées par un congé de raccordement 27e, 27i qui est agencé pour former un jeu avec la paroi 14e, 14i, ledit jeu étant adapté pour qu'un appui sur ledit congé en position de montage induise un déplacement réversible de la portée d'emmanchement 13e, 13i relativement à ladite paroi.

Ainsi, dans le cas où l'encliquetage n'est pas réalisé ou de façon incomplète lorsque l'armature 12e, 12i est en position de montage, notamment à cause de dispersions dimensionnelles, la présence d'un tel congé de raccordement 27e, 27i permet d'assurer ledit encliquetage en déplaçant la portée d'emmanchement 13e, 13i relativement à la paroi 14e, 14i tout en maintenant la portée d'appui axial 15e, 15i contre ladite paroi.

En particulier, le déplacement réversible de la portée d'emmanchement 13e, 13i est agencé pour assurer la disposition des pattes 18e, 18i d'un état contraint en interférence radiale avec la portée complémentaire axiale 17e, 17i vers leur état libre en interférence axiale avec le seuil 19e, 19i.

Pour ce faire, le jeu entre le congé de raccordement 27e, 27i et la paroi 14e, 14i est suffisant pour écarter axialement la portée arrière des pattes 18e, 18i du seuil radial 19e, 19i lors de l'appui sur ledit congé de raccordement, ledit écartement permettant d'assurer le retour élastique desdites pattes en état libre au-delà dudit seuil pour garantir l'interférence axiale d'encliquetage.

Selon le mode de réalisation représenté, l'armature 12e, 12i est montée sur la paroi 14e, 14i en disposant le congé de raccordement 27e, 27i à distance axiale de la portée radiale complémentaire 16e, 16i. Le congé de raccordement 27e, 27i est courbé extérieurement par rapport à la portée d'appui axial 15e, 15i pour permettre le maintien de ladite portée d'appui axial contre la portée complémentaire radiale 16e, 16i lors de la course d'appui dudit congé vers l'avant.

La déformation du congé de raccordement 27e, 27i vers la portée radiale complémentaire 16e, 16i induit un déplacement axial de la couronne 23e, 23i relativement à la paroi 14e, 14i, ladite déformation étant élastique pour permettre la réversibilité dudit déplacement. Ainsi, l'appui sur le congé 27e, 27i permet un déplacement de la couronne 23e, 23i vers l'avant pour favoriser le passage des pattes 18e, 18i autour du seuil 19e, 19i, l'arrêt dudit appui entrainant le retour de ladite couronne vers l'arrière permettant la mise en appui axial desdites pattes contre ledit seuil.

En relation avec les figures 1a et 2, on décrit ci-dessous un dispositif d'étanchéité agencé pour étanchéifier le côté interne de l'espace de roulement avec une armature 12i se présentant sous la forme d'un capot solidaire de l'organe extérieur 1.

L'armature 12i comprend alors un disque plein 28 dont la géométrie est agencée pour recouvrir latéralement le côté interne de l'espace de roulement afin d'empêcher la pénétration des polluants dans ledit espace. En outre, le codeur 11 est disposé derrière le disque 28 pour être également protégé des polluants par ledit disque.

En particulier, le disque 28 représenté comprend une portion centrale 29 qui est décalée axialement vers l'arrière par rapport à la portée d'appui axial 15i, ladite portion et ladite portée étant reliées par un congé axial 30. Ainsi, l'extrémité interne de l'organe intérieur 2, notamment le repli 8, est logée dans la portion centrale 29 sans interférer avec la rotation dudit organe intérieur. En outre, le codeur 11 est disposé en regard de la portée d'appui axial 15i avec un espacement axial minimal afin de limiter la distance de lecture entre ledit codeur et le capteur (non représenté) qui est destiné à être disposé devant ladite portée d'appui axial.

Les portées d'emmanchement 13i et d'appui axial 15i s'étendent autour du disque 28 en étant montées sur des portées complémentaires respectivement axiale 17i et radiale 16i formées sur l'extension axiale interne 10i. En particulier, la portée complémentaire axiale 17i s'étend vers l'avant depuis le bord extérieur de l'extension 10i, la portée complémentaire radiale 16i s'étendant depuis ledit bord extérieur sur une paroi d'extrémité de ladite extension. En variante, la portée d'emmanchement 13i peut être montée sur une portée axiale intérieure de l'extension 10i.

Le disque 28 et les portées 13i, 15i peuvent être réalisés d'une seule pièce, notamment à base de matériau plastique ou métallique, par exemple en tôle emboutie, de sorte à fiabiliser mécaniquement l'association de l'armature 12i à l'organe extérieur 1. En variante, la portée d'appui axial 15i peut être rapportée sur le bord du congé axial 30, notamment pour pouvoir réaliser ladite portée et la couronne 23i à base d'un matériau différent de celui du disque 28. En particulier, le disque 28 peut alors être réalisé à base de matériau élastomère et être monté sur la portée d'appui axial 15i par surmoulage.

Dans ce dispositif d'étanchéité, les pattes 18i sont orientées vers la base 24i pour permettre l'emmanchement de la couronne 23i et l'encliquetage desdites pattes sur le seuil radial 19i. En particulier, les secteurs 25i et la base 24i sont emmanchés respectivement de part et d'autre de la gorge annulaire 20i, ladite base étant disposée entre le bord extérieur de l'extension 10i et le seuil radial 19i.

En relation avec les figures 1b et 3, on décrit un deuxième dispositif d'étanchéité pouvant être placé du côté externe de l'espace de roulement. En variante, chaque côté de l'espace de roulement peut être équipé du dispositif d'étanchéité décrit ci-dessous.

L'armature 12e est formée d'une paroi annulaire qui présente un alésage 31 sur la périphérie duquel la portée d'emmanchement 13e est formée, la portée d'appui axial 15e s'étendant radialement autour dudit alésage en étant prolongée par une couronne extérieure libre 32 qui s'étend extérieurement vers l'arrière depuis ladite portée d'appui axial.

La portée d'emmanchement 13e est associée autour d'une portée axiale intérieure 17e de l'organe intérieur 2, la portée d'appui axial 15e étant disposée contre une portée radiale 16e entourant ladite portée axiale intérieure. Les portées complémentaires axiale 17e et radiale 16e sont reliées par une portée courbe 33 de la paroi 14e, le congé de raccordement 27e de l'armature 12e formant le jeu d'appui notamment avec ladite portée courbe.

Les pattes d'encliquetage 18e sont orientées vers l'intérieur de l'alésage 31, à l'opposé de la base annulaire 24e. La couronne 23e est montée sur la portée axiale intérieure 17e par emmanchement de la base annulaire 24e et des secteurs angulaires 25e avant encliquetage des pattes 18e dans la gorge 20e.

En outre, au moins un dispositif d'étanchéité peut présenter un élément d'étanchéité dynamique qui est solidaire d'un organe 1, 2 pour interagir avec une portée solidaire de l'autre organe 2, 1 afin d'assurer l'étanchéité d'un côté de l'espace de roulement.

L'armature 12e, 12i peut ainsi être montée sur un organe 1, 2 en étant équipée d'au moins un élément d'étanchéité dynamique qui interagit avec une portée solidaire de l'autre organe 2, 1. En variante ou complémentairement, l'armature 12e, 12i peut présenter au moins une portée avec laquelle interagit un élément d'étanchéité dynamique solidaire de l'autre organe 2, 1.

Selon le mode de réalisation représenté, le dispositif d'étanchéité externe comprend une deuxième armature 34 qui est montée sur l'extension annulaire 10e et est équipée d'un élément d'étanchéité dynamique 35 de sorte à former une chambre annulaire d'étanchéité 36 entre les armatures 12e, 34 dans laquelle s'étend une partie dudit élément d'étanchéité.

De façon avantageuse, l'élément d'étanchéité 35 est associé par surmoulage à la deuxième armature 34. En particulier, l'élément d'étanchéité dynamique 35 peut être réalisé en une seule pièce en matériau souple, par exemple en élastomère, notamment à base de copolymère butadiène nitrile (NBR), éventuellement renforcé mécaniquement par des charges telles que du noir de carbone, de NBR hydrogéné (HNBR), de fluoropolymère ou de polyacrylate.

L'élément d'étanchéité dynamique 35 peut présenter au moins une lèvre 37 qui s'étend à l'intérieur de la chambre d'étanchéité 36 en interagissant avec une portée de l'armature 12e, en étant disposé en contact frottant sur ladite portée ou en formant un jeu de chicanage avec ladite portée, afin de limiter l'introduction de polluants dans ladite chambre et donc dans l'espace de roulement.

En relation avec la figure 1b, l'élément d'étanchéité dynamique 35 présente notamment deux lèvres annulaires 37 espacées axialement en s'étendant essentiellement radialement dans la chambre d'étanchéité 36 depuis la deuxième armature 34 pour être en contact frottant radial sur la portée d'appui axial 15e.

Par ailleurs, au moins un dispositif d'étanchéité peut comprendre au moins un élément d'étanchéité statique du montage de l'armature 12e, 12i sur l'organe 1, 2, ledit élément d'étanchéité étant interposé entre la paroi 14e, 14i et ladite armature pour former l'étanchéité statique en empêchant l'introduction de polluants entre ladite armature et ladite paroi.

L'élément d'étanchéité statique peut être surmoulé sur l'armature 12e, 12i en étant réalisé en matériau souple, par exemple similaire à celui de l'élément d'étanchéité dynamique 35.

En relation avec la figure 1b, le dispositif d'étanchéité externe comprend un élément d'étanchéité statique 38 qui recouvre la portée d'appui axial 15e en étant en appui étanche sur la portée radiale complémentaire 17e. L'élément d'étanchéité 38 présente notamment une lèvre avant 38a disposée autour de la portée d'appui axial 15e et de la portée radiale complémentaire 17e pour fiabiliser l'étanchéité statique du montage en venant étanchéifier l'interface entre lesdites portées.

En relation avec la figure 4, on décrit ci-dessous une variante au dispositif d'étanchéité des figures 1a et 2 qui est agencé pour étanchéifier le côté interne de l'espace de roulement.

Pour ce faire, le disque 28 de l'armature 12i est remplacé par un élément d'étanchéité dynamique 40 qui est associé à l'intérieur du congé axial 30 par l'intermédiaire d'une portée radiale annulaire 41 de ladite armature. L'élément d'étanchéité 40 comprend des lèvres 42 qui sont agencées pour venir en contact frottant d'étanchéité sur l'organe tournant 2. En particulier, deux lèvres annulaires 42 sont espacées axialement pour venir en contact frottant sur une portée axiale de l'organe tournant 2, notamment de la bague rapportée 7.

Par ailleurs, le congé de raccordement 27i est équipé d'un bourrelet d'étanchéité annulaire 43 qui est agencé pour venir en appui sur la paroi 14i pour entourer de façon étanche l'appui de la portée 15i sur ladite paroi en position de montage.

La figure 4 représente également la possibilité de prévoir au moins un orifice 44 traversant le congé de raccordement 27i pour pouvoir évacuer l'eau présente à l'interface entre ledit congé et la paroi 14i. En particulier, une pluralité d'orifices 44 peut être répartie angulairement autour du congé 27i.

## Revendications

1. Palier à roulement comprenant un organe extérieur (1), un organe intérieur (2) et des corps roulants (5) disposés dans un espace de roulement formé entre lesdits organes pour permettre leur rotation relative, ledit palier étant équipé d'un dispositif d'étanchéité comprenant une armature (12e, 12i) présentant une portée d'emmanchement (13e, 13i) sur une paroi (14e, 14i) d'un desdits organes, ladite armature présentant en outre une portée d'appui axial (15e, 15i) sur ladite paroi en définissant une position de montage de l'armature (12e, 12i) relativement à l'organe (1, 2), ladite portée d'emmanchement étant équipée de pattes d'encliquetage (18e, 18i) et ladite paroi présentant un seuil radial (19e, 19i) sur lequel lesdites pattes sont destinées à venir en appui axial arrière, ledit palier étant **caractérisé en ce que** les portées d'appui (15e, 15i) et d'emmanchement (13e, 13i) sont reliées par un congé de raccordement (27e, 27i) qui est agencé pour former un jeu avec la paroi (14e, 14i), ledit jeu étant adapté pour qu'un appui sur ledit congé en position de montage induise un déplacement réversible de la portée d'emmanchement (13e, 13i) relativement à la paroi (14e, 14i), ledit déplacement réversible étant agencé pour fiabiliser la disposition des pattes d'encliquetage (18e, 18i) en appui axial arrière contre le seuil (19e, 19i).

2. Palier à roulement selon la revendication 1, **caractérisé en ce que** l'armature (12e, 12i) comprend une couronne axiale (23e, 23i) qui est conformée pour présenter la portée d'emmanchement (13e, 13i) et les pattes d'encliquetage (18e, 18i), la déformation du congé de raccordement (27e, 27i) induisant un déplacement axial vers l'avant de ladite couronne relativement à la paroi (14e, 14i).

3. Palier à roulement selon l'une des revendications 1 ou 2, **caractérisé en ce que** les pattes d'encliquetage (18e, 18i) sont déformables radialement entre un état contraint inscrit dans la portée d'emmanchement (13e, 13i) et un état libre définissant un diamètre circonscrit d'interférence avec le seuil (19e, 19i).

4. Palier à roulement selon la revendication 3, **caractérisé en ce que** les pattes (18e, 18i) sont réparties angulairement à l'intérieur de la portée d'emmanchement (13e, 13i) en étant séparées circonférentiellement par des encoches (22e, 22i) qui sont agencées pour faciliter le débattement angulaire élastique radial de chacune desdites pattes lors de l'encliquetage.

5. Palier à roulement selon l'une quelconque des revendications 1 à 4, **caractérisé en ce que** la paroi (14e, 14i) présente deux portées complémentaires respectivement axiale (17e, 17i) et radiale (16e, 16i) sur lesquelles respectivement les portées d'emmanchement (13e, 13i) et d'appui (15e, 15i) sont disposées.

6. Palier à roulement selon la revendication 5, **caractérisé en ce que** le congé de raccordement (27e, 27i) forme un jeu axial avec la portée radiale complémentaire (16e, 16i).

7. Palier à roulement selon l'une des revendications 5 ou 6, **caractérisé en ce que** le seuil (19e, 19i) est formé sur le bord arrière d'une gorge (20e, 20i) réalisée dans la portée axiale complémentaire (17e, 17i).

8. Palier à roulement selon l'une quelconque des revendications 1 à 7, **caractérisé en ce que** les pattes (18e, 18i) présentent une portée arrière libre qui est destinée à venir en interférence axiale sur le seuil (19e, 19i).

9. Palier à roulement selon la revendication 1 à 8, **caractérisé en ce que** le congé de raccordement (27e, 27i) est courbé extérieurement par rapport à la portée d'appui axial (15e, 15i).

10. Palier à roulement selon l'une quelconque des revendications 1 à 9, **caractérisé en ce que** l'armature (12i) présente un disque (28) agencé pour recouvrir latéralement l'espace de roulement, les portées d'appui (15i) et d'emmanchement (13i) s'étendant autour dudit disque.

11. Palier à roulement selon l'une quelconque des revendications 1 à 9, **caractérisé en ce que** l'armature (12e) présente un alésage (31) sur la périphérie duquel la portée d'emmanchement (13e) est formée, la portée d'appui axial (15e) s'étendant autour dudit alésage.

12. Palier à roulement selon la revendication 11, **caractérisé en ce que** le dispositif d'étanchéité présente un élément d'étanchéité dynamique (35) qui est solidaire d'un organe (1, 2) pour interagir avec une portée solidaire de l'autre organe (2, 1), l'armature (12e, 12i) présentant ledit élément d'étanchéité dynamique et/ou ladite portée d'interaction.

13. Palier à roulement selon la revendication 12, **caractérisé en ce qu'**un élément d'étanchéité dynamique (35) est disposé en contact frottant sur une portée d'interaction ou forme un jeu de chicanage avec une portée d'interaction.

14. Palier à roulement selon l'une quelconque des revendications 1 à 13, **caractérisé en ce que** l'armature (12e, 12i) est équipée d'au moins un élément d'étanchéité statique (38) qui est interposé entre ladite armature et la paroi (14e, 14i).

15. Palier à roulement selon l'une quelconque des revendications 1 à 14, **caractérisé en ce que** le congé de raccordement (27e, 27i) est traversé par au moins un orifice (44).

## Patentansprüche

1. Wälzlager, umfassend ein äußeres Bauteil (1), ein inneres Bauteil (2) und Wälzkörper (5), die in einem Wälzraum angeordnet sind, der zwischen den Bauteilen ausgebildet ist, um ihre relative Drehung zu ermöglichen, wobei das Lager mit einer Abdichtvorrichtung ausgestattet ist, die eine Armatur (12e, 12i) umfasst, die eine Aufpressfläche (13e, 13i) zum Aufpressen auf eine Wand (14e, 14i) eines der Bauteile aufweist, wobei die Armatur darüber hinaus eine Auflagefläche zur axialen Auflage (15e, 15i) auf die Wand aufweist und dabei eine Montageposition der Armatur (12e, 12i) relativ zum Bauteil (1, 2) definiert wird, wobei die Aufpressfläche mit Einrastlaschen (18e, 18i) ausgestattet ist und die Wand eine radiale Schwelle (19e, 19i) aufweist, an der die Laschen axial hinten zur Anlage kommen sollen, wobei das Lager **dadurch gekennzeichnet ist, dass** die Auflageflächen (15e, 15i) und die Aufpressflächen (13e, 13i) durch eine Übergangsausrundung (27e, 27i) verbunden sind, die so gestaltet ist, dass sie ein Spiel mit der Wand (14e, 14i) bildet, wobei das Spiel so angepasst ist, dass ein Drücken auf die Ausrundung in der Montageposition zu einer reversiblen Verlagerung der Aufpressfläche (13e, 13i) in Bezug auf die Wand (14e, 14i) führt, wobei die reversible Verlagerung so gestaltet ist, dass die Anordnung der an der Schwelle (19e, 19i) hinten axial anliegenden Einrastlaschen (18e, 18i) zuverlässiger gestaltet wird.

2. Wälzlager nach Anspruch 1, **dadurch gekennzeichnet, dass** die Armatur (12e, 12i) einen axialen Kranz (23e, 23i) umfasst, der so ausgebildet ist, dass er die Aufpressfläche (13e, 13i) und die Einrastlaschen (18e, 18i) aufweist, wobei die Verformung der Übergangsausrundung (27e, 27i) zu einer axialen Verlagerung des Kranzes nach vorne in Bezug auf die Wand (14e, 14i) führt.

3. Wälzlager nach einem der Ansprüche 1 oder 2, **dadurch gekennzeichnet, dass** die Einrastlaschen (18e, 18i) zwischen einem gespannten Zustand, der in die Aufpressfläche (13e, 13i) einbeschrieben ist, und einem freien Zustand, der einen umbeschriebenen Interferenzdurchmesser mit der Schwelle (19e, 19i) definiert, radial verformbar sind.

4. Wälzlager nach Anspruch 3, **dadurch gekennzeichnet, dass** die Laschen (18e, 18i) winklig innerhalb der Aufpressfläche (13e, 13i) verteilt sind und dabei entlang des Umfangs durch Schlitze (22e, 22i) geteilt sind, die so gestaltet sind, dass der winklige elastische radiale Ausschlag jeder der Laschen beim Einrasten erleichtert wird.

5. Wälzlager nach einem der Ansprüche 1 bis 4, **dadurch gekennzeichnet, dass** die Wand (14e, 14i) zwei komplementär ausgebildete axiale (17e, 17i) bzw. radiale (16e, 16i) Flächen aufweist, auf denen die Aufpressflächen (13e, 13i) und Auflageflächen (15e, 15i) angeordnet sind.

6. Wälzlager nach Anspruch 5, **dadurch gekennzeichnet, dass** die Übergangsausrundung (27e, 27i) ein axiales Spiel mit der komplementär ausgebildeten radialen Fläche (16e, 16i) bildet.

7. Wälzlager nach einem der Ansprüche 5 oder 6, **dadurch gekennzeichnet, dass** die Schwelle (19e, 19i) auf der hinteren Kante einer Rille (20e, 20i) gebildet ist, die in der komplementär ausgebildeten axialen Fläche (17e, 17i) ausgeführt ist.

8. Wälzlager nach einem der Ansprüche 1 bis 7, **dadurch gekennzeichnet, dass** die Laschen (18e, 18i) eine hintere freie Fläche aufweisen, die dazu bestimmt ist, mit axialem Übermaß auf die Schwelle (19e, 19i) zu gelangen.

9. Wälzlager nach Anspruch 1 bis 8, **dadurch gekennzeichnet, dass** die Übergangsausrundung (27e, 27i) außen in Bezug auf die Auflagefläche zur axialen Auflage (15e, 15i) gekrümmt ist.

10. Wälzlager nach einem der Ansprüche 1 bis 9, **dadurch gekennzeichnet, dass** die Armatur (12i) eine Scheibe (28) aufweist, die so gestaltet ist, dass sie seitlich den Wälzraum abdeckt, wobei sich die Auflagefläche (15i) und Aufpressfläche (13i) um die Scheibe herum erstrecken.

11. Wälzlager nach einem der Ansprüche 1 bis 9, **dadurch gekennzeichnet, dass** die Armatur (12e) eine Bohrung (31) aufweist, an deren Rand die Aufpressfläche (13e) gebildet ist, wobei sich die Auflagefläche zur axialen Auflage (15e) um die Bohrung herum erstreckt.

12. Wälzlager nach Anspruch 11, **dadurch gekennzeichnet, dass** die Abdichtvorrichtung ein dynamisches Abdichtelement (35) aufweist, das fest mit einem Bauteil (1, 2) verbunden ist, um mit einer mit dem anderen Bauteil (2, 1) fest verbundenen Fläche zu interagieren, wobei die Armatur (12e, 12i) das dynamische Abdichtelement und/oder die Interaktionsfläche aufweist.

13. Wälzlager nach Anspruch 12, **dadurch gekennzeichnet, dass** ein dynamisches Abdichtelement (35) in reibendem Kontakt auf einer Interaktionsfläche angeordnet ist oder eine Schikanenspiel mit einer Interaktionsfläche bildet.

14. Wälzlager nach einem der Ansprüche 1 bis 13, **dadurch gekennzeichnet, dass** die Armatur (12e, 12i) mit mindestens einem statischen Abdichtelement (38) ausgestattet ist, das zwischen die Armatur und die Wand (14e, 14i) gesetzt ist.

15. Wälzlager nach einem der Ansprüche 1 bis 14, **dadurch gekennzeichnet, dass** die Übergangsausrundung (27e, 27i) von mindestens einer Öffnung (44) durchquert wird.

## Claims

1. Roller bearing comprising an outer member (1), an inner member (2) and rolling bodies (5) arranged in a bearing space formed between said members in order to allow for the relative rotation thereof, said bearing being provided with a sealing device comprising a frame (12e, 12i) having a fitting surface (13e, 13i) on a wall (14e, 14i) of one of said members, said frame further having an axial bearing surface (15e, 15i) on said wall by defining a mounting position of the frame (12e, 12i) relatively to the member (1, 2), said fitting surface being provided with snap-fit lugs (18e, 18i) and said wall having a radial threshold (19e, 19i) whereon said lugs are intended to bear axially back, said bearing being **characterised in that** the bearing surfaces (15e, 15i) and fitting surfaces (13e, 13i) are connected by a fillet (27e, 27i) that is arranged to form a clearance with the wall (14e, 14i), said clearance being adapted so that a bearing on said fillet in the mounting position induces a reversible displacement of the fitting surface (13e, 13i) relatively to the wall (14e, 14i), with said reversible displacement being arranged to make reliable the arrangement of the snap-fit lugs (18e, 18i) bearing axially back against the threshold (19e, 19i).

2. Roller bearing according to claim 1, **characterised in that** the frame (12e, 12i) comprises an axial ring (23e, 23i) which is shaped to have the fitting surface (13e, 13i) and the snap-fit lugs (18e, 18i), the deformation of the fillet (27e, 27i) inducing an axial displacement towards the front of said ring relatively to the wall (14e, 14i).

3. Roller bearing according to one of claims 1 or 2, **characterised in that** the snap-fit lugs (18e, 18i) can be deformed radially between a constrained state inscribed in the fitting surface (13e, 13i) and a free state defining a circumscribed diameter of interference with the threshold (19e, 19i).

4. Roller bearing according to claim 3, **characterised in that** the lugs (18e, 18i) are angular distributed inside the fitting surface (13e, 13i) by being separated circumferentially by notches (22e, 22i) which are arranged to facilitate the radial elastic angular displacement of each one of said lugs during the snap-fitting.

5. Roller bearing according to any of claims 1 to 4, **characterised in that** the wall (14e, 14i) has two additional surfaces respectively axial (17e, 17i) and radial (16e, 16i) whereon respectively the fitting surfaces (13e, 13i) and bearing surfaces (15e, 15i) are arranged.

6. Roller bearing according to claim 5, **characterised in that** the fillet (27e, 27i) forms an axial clearance with the additional radial surface (16e, 16i).

7. Roller bearing according to one of claims 5 or 6, **characterised in that** the threshold (19e, 19i) is formed on the rear edge of a groove (20e, 20i) made in the additional axial surface (17e, 17i).

8. Roller bearing according to any of claims 1 to 7, **characterised in that** the lugs (18e, 18i) have a free rear bearing that is intended to cause axial interference on the threshold (19e, 19i).

9. Roller bearing according to claim 1 to 8, **characterised in that** the fillet (27e, 27i) is curved exteriorly with respect to the axial bearing surface (15e, 15i).

10. Roller bearing according to any of claims 1 to 9, **characterised in that** the frame (12i) has a disc (28) arranged to laterally cover the bearing space, with the bearing surfaces (15i) and fitting surfaces (13i) extending around said disc.

11. Roller bearing according to any of claims 1 to 9, **characterised in that** the frame (12e) has a bore (31) on the periphery of which the fitting surface (13e) is formed, with the axial bearing surface (15e) extending around said bore.

12. Roller bearing according to claim 11, **characterised in that** the sealing device has a dynamic sealing element (35) that is integral with a member (1, 2) for interacting with a surface integral with the other member (2, 1), the frame (12e, 12i) having said dynamic sealing element and/or said interaction surface.

13. Roller bearing according to claim 12, **characterised in that** a dynamic sealing element (35) is arranged with friction contact on an interaction surface or form a toppling clearance with an interaction surface.

14. Roller bearing according to any of claims 1 to 13, **characterised in that** the frame (12e, 12i) is provided with a least one static sealing element (38) which is inserted between said frame and the wall (14e, 14i).

15. Roller bearing according to any of claims 1 to 14, **characterised in that** the fillet (27e, 27i) is passed through by at least one orifice (44).
